**Europäisches Patentamt**

**European Patent Office**

**Office européen des brevets**

(19)

(11) **EP 1 069 417 B1**

(12) ## EUROPÄISCHE PATENTSCHRIFT

(45) Veröffentlichungstag und Bekanntmachung des Hinweises auf die Patenterteilung:
**09.04.2003 Patentblatt 2003/15**

(51) Int Cl.7: **G01L 1/12**, G01L 1/00

(21) Anmeldenummer: **00810591.8**

(22) Anmeldetag: **05.07.2000**

(54) **Verfahren und Einrichtung zur Bestimmung des zeitlichen Verlaufs der Stosswelle in einem schlagbeanspruchten ferromagnetischen Bauteil**

Method and device for determining the temporal form of the shock wave in a ferrmomagnetic member which is objected to impacts

Procédé et dispositif pour déterminer la forme temporelle de l'onde de choc dans un membre ferromagnetique qui est soumis aux impacts

(84) Benannte Vertragsstaaten:
**CH DE FR GB LI NL SE**

(30) Priorität: **14.07.1999 DE 19932838**

(43) Veröffentlichungstag der Anmeldung:
**17.01.2001 Patentblatt 2001/03**

(73) Patentinhaber: **HILTI Aktiengesellschaft**
**9494 Schaan (LI)**

(72) Erfinder:
- **Schaer, Roland**
  **9472 Grabs (CH)**
- **Böni, Hans**
  **9470 Buchs (CH)**
- **Fabo, Peter**
  **84215 Bratislava (SK)**
- **Jarosevic, Andrey**
  **84215 Bratislava (SK)**

(74) Vertreter: **Wildi, Roland et al**
**Hilti Aktiengesellschaft,**
**Feldkircherstrasse 100,**
**Postfach 333**
**9494 Schaan (LI)**

(56) Entgegenhaltungen:
- **PATENT ABSTRACTS OF JAPAN vol. 013, no. 189 (M-821), 8. Mai 1989 (1989-05-08) & JP 01 016349 A (NISSAN MOTOR CO LTD), 19. Januar 1989 (1989-01-19)**
- **PATENT ABSTRACTS OF JAPAN vol. 010, no. 177 (P-470), 21. Juni 1986 (1986-06-21) & JP 61 026831 A (UNYUSHO SENPAKU GIJUTSU KENKYUSHO), 6. Februar 1986 (1986-02-06)**
- **HECKER, R.: "Anwendung des magnetoelastischen Effekts zur Messung von Dehnwellen in stabförmigen Körpern schlagender Machinen" TECHNISCHES MESSEN, Nr. 6, 1988, Seiten 221-226, XP002155485**

**Beschreibung**

Die Erfindung betrifft ein Verfahren und eine Einrichtung zur Bestimmung des zeitlichen Verlaufs der Stosswelle in einem schlagenden oder durch Schlag beanspruchten ferromagnetischen Bauteil, insbesondere Werkzeug, bei dem das Bauteil mit einem magnetischen Fluss beaufschlagt wird, dessen Änderungsgeschwindigkeit bei Schlagwirkung auf das Bauteil mittels einer dem Bauteil zugeordneten Messeinrichtung als Mess-Spannung erfasst wird.

Die Kenntnis des zeitlichen Verlaufs der Stosswelle(n) in einem Bauteil, insbesondere in einem Werkzeug, ist beispielsweise zur Optimierung der technischen Eigenschaften, zum Test sowie zur Antriebsprogrammierung, aber auch zur Qualitätskontrolle von schlagenden Abbaugeräten wie Bohrhämmern erforderlich. Zur Messung solcher Stosswellen werden heute fast ausschließlich Dehnmessstreifen verwendet. Die Applizierung solcher Messstreifen auf einen Messstab oder den Schaft eines Werkzeugs ist sehr aufwendig. Sofern es sich außerdem um ein rotierendes Werkzeug handelt, ist eine Messung nur mit einer aufwendigen Übertragungselektronik möglich. Zudem sind Dehnmessstreifen, vor allem deren elektrische Anschlüsse, sehr empfindlich gegen Vibrationen.

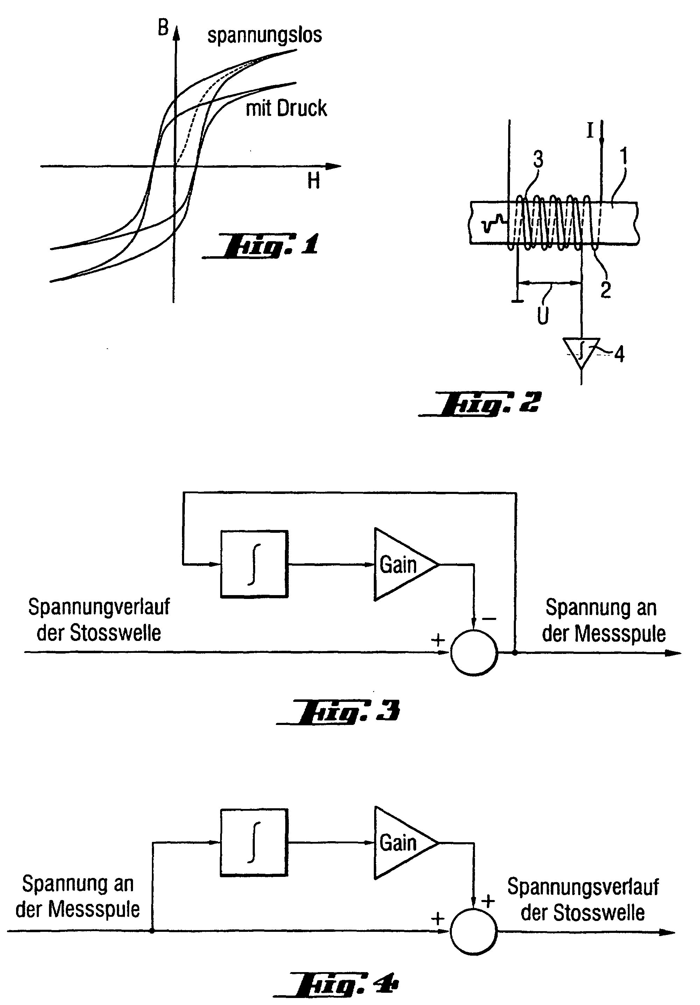

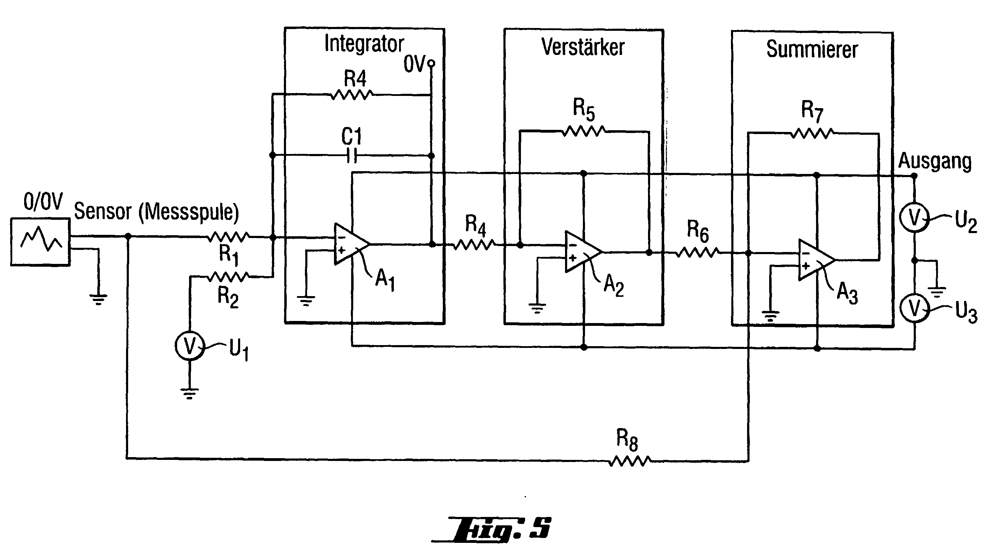

Zur Messung statischer oder quasi statischer Kräfte sind Sensoren, welche auf dem magnetoelastischen Prinzip (ME) beruhen, eine mögliche Alternative zu Dehnmessstreifen (vgl. LIT. [1]). Unter dem magnetoelastischen Effekt (vgl. LIT. [2] und [3]) der Umkehrerscheinung, der Magnetostriktion, versteht man die Änderung von magnetischen Eigenschaften, etwa der Permeabilität $\mu_r$, bei einer mechanischen Beanspruchung. Letztere hat unter anderem zur Folge, dass sich ein induzierter magnetischer Fluss in einem ferromagnetischen Material in Abhängigkeit von der angelegten mechanischen Spannung ändert. Fig. 1 der beigefügten Zeichnungen zeigt qualitativ den Einfluss einer Druckspannung auf die bekannte Magnetisierungs-Hysteresekurve. Zur Messung der in dem Bauteil wirkenden mechanischen Spannung wird das belastete Bauteil 1 (vgl. Fig. 2) mittels einer durch einen Wechselstrom I beaufschlagten Magnetisierungsspule 2 mit einem Wechselfeld magnetisiert. Der dabei entstehende Wechselfluss erzeugt in einer zweiten Spule, der Messspule 3, eine elektrische Spannung, welche proportional zur Änderungsgeschwindigkeit des magnetischen Flusses ist. Aus dem Amplitudenverhältnis der Mess-Spannung U zum Strom 1 in der Erregerspule 2 kann die mechanische Spannung - und damit die Last, unter welcher das Bauteil 1 steht - berechnet werden. Zur Vermeidung einer das Bauteil, z. B. den Schaft eines Werkzeugs umgebenden Magnetisierungs- bzw. Messspule ist es aus JP 61 026 831 A auch bekannt, die Spule auf ein ferromagnetisches Joch zu wickeln, über dessen Pole der magnetische Fluss das Bauteil beaufschlagt.

Zur Messung von sich schnell ändernden mechanischen Spannungen, wie dies bei einer Stosswelle der Fall ist, kann die Magnetisierung auch mit einem Gleichfeld erfolgen (vgl. LIT.[4], [5]). Mit der Messspule 3 wird dann die Änderungsgeschwindigkeit der mechanischen Spannung, das heißt mathematisch ausgedrückt die erste Ableitung der Stosswelle, erfasst. Durch eine einfache Integration (in 4) erhält man den Spannungsverlauf der Stosswelle.

Die sehr schnellen Magnetflussänderungen beim Stosswellendurchgang durch das Bauteil 1 induzieren aber im elektrisch leitenden Material des Bauteils - beispielsweise in einem Bohrer - Wirbelströme. Diese Wirbelströme ihrerseits beeinflussen wiederum den Magnetfluss und damit den Verlauf der Spannung U an den Klemmen der Messspule 3. Dieser Effekt ist ausführlich in LIT.[6] beschrieben. Da sich die Wirbelströme wegen Stromverdrängungseffekten vor allem im oberflächennahen Bereich des Bauteils 1 ausbreiten, wird dort vorgeschlagen, Wirbelstromeffekte durch Einkerbungen am Werkzeugumfang zu reduzieren. Dieser Vorschlag liegt auch dem in JP 01 016 349 A beschriebenen Verfahren zum Feststellen von Beschädigungen in einem Spindelkopf einer Werkzeugmaschine zugrunde.

Zur Messung von mechanischen Spannungen in Bauteilen der genannten Art ist es auch bekannt, Streifen aus Materialien mit besonders ausgeprägtem elektroelastischem Verhalten (z. B. amorphe Metalle) auf das belastete Bauteil aufzukleben und die Magnetflussänderung in diesem Streifen zu erfassen.

Nachteilig an dieser Methode ist aber, dass, ähnlich wie bei den Dehnmessstreifen, ein aufwendiger Klebeprozess notwendig ist.

Der Erfindung liegt damit die Aufgabe zugrunde, ein Verfahren sowie eine Einrichtung zur Bestimmung des zeitlichen Verlaufs der Stosswelle in einem schlagbeanspruchten Bauteil, insbesondere einem Werkzeug, anzugeben.

Nach der Lehre des Patentanspruchs 1 wird dieses Problem bei einem Verfahren zur Bestimmung des zeitlichen Verlaufs der Stosswelle in einem schlagenden oder durch Schlag beanspruchten ferromagnetischen Bauteil, Insbesondere einem Werkzeug, bei dem das Bauteil mit einem magnetischen Fluss beaufschlagt wird, dessen Änderungsgeschwindigkeit bei einer sich schlagartig ändernden Belastung mittels einer dem Bauteil zugeordneten Messeinrichtung als Spannung erfasst wird, erfindungsgemäß dadurch gekennzeichnet, dass der Stosswellenverlauf aus der additiven Überlagerung der Mess-Spannung und der integrierten Mess-Spannung gewonnen wird.

Vorteilhafte Weiterbildungen der Erfindung sind in abhängigen Patentansprüchen enthalten und werden nachfolgend weiter erläutert.

Erfindungsgemäße Einrichtungen zur Durchführung des Verfahrens sind in den Patentansprüchen 3 und 4 definiert.

Wie oben beschrieben, war es wegen der in dem Bauteil induzierten Wirbelströme bisher nicht möglich, den Verlauf von Stosswellen mittels eines ME-Sensors exakt zu messen (vgl. LIT.[5]). Die Erfindung geht nun von dem Gedanken aus, dass es möglich sein müsste, die Auswirkungen der Wirbelströme auf den Verlauf der Stosswelle durch ein mathematisches Modell oder eine Ersatzschaltung zu beschreiben. Hierbei wird von der Beobachtung ausgegangen, dass Wirbelströme Magnetflussänderungen entgegenwirken. Dies führt dazu, dass der Magnetfluss mit ansteigender Frequenz nicht mehr proportional zur mechanischen Spannung in dem Bauteil ist, sondern immer mehr integrale Anteile davon enthält. In anderen Worten, es wurde beobachtet, dass die Mess-Spannung nicht mehr das reine Differential der Stosswelle ist, sondern mit steigender Frequenz zunehmend proportionale Anteile enthält.

Die Erfindung und vorteilhafte Ausführungsformen derselben werden nachfolgend unter Bezug auf die Zeichnung in beispielsweisen Ausführungsformen näher erläutert. Es zeigen:

Fig. 1   die bereits erläuterte Abhängigkeit des Verlaufs einer Magnetisierungs-Hysteresekurve bei Anlegen beispielsweise einer mechanischen Druckspannung auf ein ferromagnetisches Bauteil;

Fig. 2   das bereits erläuterte Grundprinzip zur Bestimmung des Stosswellenverlaufs bei Gleich- oder Wechselstrommagnetisierung des betreffenden Bauteils;

Fig. 3   ein einfaches Modell oder eine Ersatzschaltung zur Veranschaulichung der Wirkung von Wirbelströmen bei Stosswellenbeanspruchung eines ferromagnetischen Bauteils;

Fig. 4   ein Modell oder Ersatzschaltbild zur Rekonstruktion einer Stosswelle aus einer aufgenommenen Mess-Spannung;

Fig. 5   ein Ausführungsbeispiel für eine elektronische Schaltung zur Realisierung der Rekonstruktion der Stosswelle aus einer MessSpannung; und

Fig. 6   mit Teilfiguren A, B, C und D unterschiedliche Varianten zur Speisung einer Magnetisierungsspule und zur Gewinnung eines Messsignals.

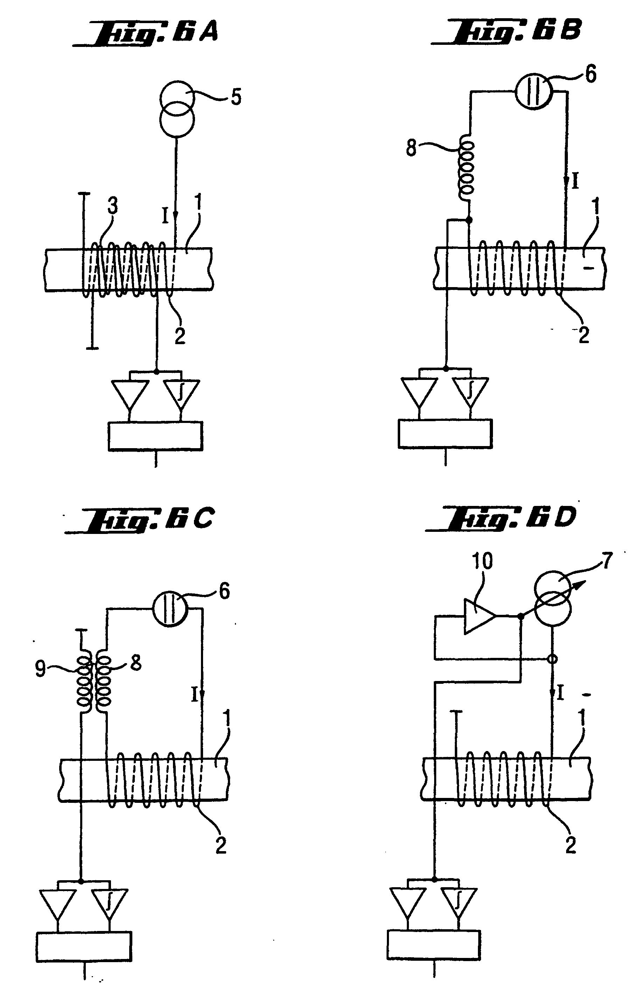

Fig. 3 veranschaulicht ein Modell, mit welchem sich die Auswirkungen von Wirbelströmen auf die Mess-Spannung beschreiben lassen. Im Prinzip handelt es sich dabei um ein Hochpassfilter mit der Grenzfrequenz $f_e = \frac{Gain}{2\pi}$, das sich auch als bandbegrenztes und mit 1/Gain verstärkendes Differenzierglied betrachten lässt.

Zur Rekonstruktion der Stosswelle aus der Mess-Spannung ist, wie Fig. 4 wiedergibt, die inverse Funktion zu verwenden. Diese Funktion lässt sich so interpretieren, dass das Spannungssignal an der Messspule nur teilweise - also im Wesentlichen für Frequenzen unterhalb $f_e$ - integriert wird, um die oben erläuterte Erkenntnis zu nutzen, dass die Wirbelströme bereits integrierend wirken.

Die Fig. 5 zeigt eine erprobte elektronische Schaltung zur Realisierung der Rekonstruktion der Stosswelle aus der Mess-Spannung gemäß dem Funktionsoder Ersatzschaltbild der Fig. 4. Ein Sensor - also insbesondere die Messspule - liefert eine Mess-Spannung an den durch eine geringe Vorspannung $U_1$ auf einen bestimmten Ansprechpunkt gesetzten invertierenden Eingang eines als Integrator geschalteten Operationsverstärkers $A_1$. Der Ausgang des Verstärkers $A_1$ beaufschlagt wiederum den invertierenden Eingang eines bandbegrenzenden Verstärkers $A_2$, dessen Ausgangssignal am invertierenden Eingang eines Summierverstärkers $A_3$ mit dem Messspulensignal zusammengeführt ist.

Für die dargestellten Bauelemente gelten beispielsweise folgende Werte:

$U_1$ = 75mV
$A_1$, $A_2$, $A_3$ = OP-Verstärker (z. B. TL 084)
$R_1$, $R_2$, $R_4$, $R_6$, $R_7$ = 10 kΩ
$U_2$, $U_3$ = 15 V
$R_3$ = 10 MΩ
$R_5$ = 100 kΩ
$C_1$ = 100 nF
$R_8$ = 47 kΩ

Zur Speisung der Magnetisierungsspule 2 sowie zur Gewinnung des Messsignals sind neben der anhand der Fig. 2 beschriebenen und in Fig. 6A nochmals schematisch mit Anwendung auf die Erfindung wiedergegebener Anordnung mit einer Magnetisierungsspule 2 und einer Messspule 3 auch andere Anordnungen im Rahmen der Erfindung möglich. So kann, wie die Fig. 6B bis 6D zeigen, die Messspule 3 weggelassen werden, da die Magnetflussänderung aufgrund einer Stosswelle ebenso in der Magnetisierungsspule 2 eine Spannung induziert. Das Messsignal lässt sich also auch an der Magnetisierungsspule 2 abgreifen.

Wie die Fig. 6B veranschaulicht, kann zunächst die Stromquelle 5 gemäß Fig. 6A durch eine Spannungsquelle 6 mit Serieninduktivität 8 ersetzt sein. Die Serieninduktivität sollte dabei einige Größenordnungen über der Induktivität der Magnetisierungsspule 2 liegen.

Die Fig. 6C zeigt einen galvanisch entkoppelten hinsichtlich der Impedanz anpassbaren Abgriff des Messsignals über eine Transformatorkopplung 9 mit der Serieninduktivität 8.

Wird - wie die Fig. 6D veranschaulicht - die Magnetisierungsspule 2 über eine schnell regelbare Stromquelle 7 gespeist, so kann die über einen Regler 10 zugeführte Regelgröße direkt als Messsignal verwendet werden. Damit ergibt sich eine besonders einfache Variante für das Problem der Signalerfassung, die für manche Anwendungsfälle von besonderem Vorteil ist.

**Literaturliste**

LIT. [1]  Jarosevic, A., et al.: Vorspannungsmessung an Baukonstruktionen, Braunschweiger Bauseminar: Neue Technologien im Bauwesen, Braunschweig Nov. 12. - 13., 1992, Heft 97, P. 71 - 82

LIT. [2]  Seekircher, J.: Magnetoelastische Kraftsensoren mit amorphen Metallen, VDI Fortschritt-Berichte, Reihe 8: Mess-, Steuerungs- und Regelungstechnik Nr. 266. VDI Verlag

LIT. [3]  Boll, R.: Weichmagnetische Werkstoffe, 4. Auflage, ISBN 3-8009-1546-4, Vacuumschmelze GMBH, 1990

LIT. [4]  Hecker, R., Schröder, P.: Nutzung mechanischer u. elektromechanischer Effekte zur Messung elastischer Wellen in Stäben, Technisches Messen tm 11/95, R. Oldenburg Verlag

LIT. [5]  Hecker, R.: Anwendung des magnetoelastischen Effekts zur Messung von Dehnwellen in stabförmigen Körpern schlagender Maschinen, Technisches Messen tm 6/88, 55. Jahrgang, 1988

LIT. [6]  Malkinsky, L. M.: On the magnetoelastic sensor design for the impact energy measurement, Arbeitsbericht A-IF7-45/94, Konzern-Forschung, Hilti AG, Schaan 1994

**Patentansprüche**

1. Verfahren zur Bestimmung des zeitlichen Verlaufs der Stosswelle in einem schlagenden oder durch schlagähnliche Belastung beanspruchten ferromagnetischen Bauteil, insbesondere Werkzeug, bei dem das Bauteil mit einem magnetischen Fluss beaufschlagt wird, dessen Änderungsgeschwindigkeit bei Schlageinwirkung mittels einer dem Bauteil zugeordneten Messeinrichtung als Mess-Spannung erfasst wird, **dadurch gekennzeichnet, dass** der Stosswellenverlauf aus der additiven Überlagerung der Mess-Spannung und der integrierten Mess-Spannung gewonnen wird.

2. Verfahren nach Anspruch 1, bei dem die Induzierung des Magnetflusses über eine das Bauteil umgebende Magnetisierungsspule (2) erfolgt, wobei die Mess-Spannung an der Magnetisierungsspule (2) abgegriffen wird.

3. Einrichtung zur Bestimmung des zeitlichen Verlaufs der Stosswelle in einem schlagenden oder durch schlagähnliche Belastung beanspruchten ferromagnetischen Bauteil, insbesondere in einem Werkzeug, mit Mitteln zum Induzieren eines Magnetflusses über eine das Bauteil (1) umgebende Magnetisierungsspule (2), **dadurch gekennzeichnet, dass** die Magnetisierungsspule (2) von einer Spannungsquelle (6) über eine in Serie liegende Induktivität (8 bzw. 8, 9) gespeist und die Mess-Spannung an der Serieninduktivität abgreifbar ist, und dass Mittel zur additiven Überlagerung der Mess-Spannung und der integrierten Mess-Spannung sowie Mittel zur Gewinnung des Stosswellenverlaufs aus der genannten additiven Überlagerung vorhanden sind.

4. Einrichtung zur Bestimmung des zeitlichen Verlaufs der Stosswelle in einem schlagenden oder durch schlagähnliche Belastung beanspruchten ferromagnetischen Bauteil, insbesondere in einem Werkzeug, mit Mitteln zum Induzieren eines Magnetflusses über eine das Bauteil (1) umgebende Magnetisierungsspule (2), **dadurch gekennzeichnet, dass** die Magnetisierungsspule (2) durch eine geregelte Stromquelle (7) gespeist ist, deren Regelspannung als Mess-Spannung verwendet wird, und dass Mittel zur additiven Überlagerung der Mess-Spannung und der-integrierten Mess-Spannung sowie Mittel zur Gewinnung des Stosswellenverlaufs aus der genannten additiven Überlagerung vorhanden sind.

**Claims**

1. Method for determining the temporal course of a shockwave in a ferro-magnetic component which is subjected to impacting or impact like loads, in particular a tool in which the component is charged with a magnetic flow and its speed of change during the effect of an impact is determined as measuring current by means of a measuring device associated with the component, **characterised in that** the shockwave course is obtained from an additive superposition of the measuring current and the integrated measuring current.

2. Method according to Claim 1, where induction of the magnet flow is carried out via a magnetising coil (2) which surrounds the component, and the measuring current is picked off the magnetising coil (2).

3. Device for determining the temporal course of a shockwave in a ferro-magnetic component which is subjected to impacting or impact like loads, in particular a tool, including means of inducing a magnet flow via a magnetising coil (2) which surrounds the component (1), **characterised in that** the magnetising coil (2) is fed by a current source (6) via an inductivity in series (8 or 8, 9), and the measuring current is picked off at the series inductivity, and the means for additive superposition of the measuring current and the integrated measuring current as well as means for obtaining a shockwave course from the aforementioned additive superposition are available.

4. Device for determining the temporal course of a shockwave in a ferro-magnetic component which is subjected to impacting or impact like loads, in particular a tool, by means of inducing a magnet flow via a magnetising coil (2) which surrounds the component (1), **characterised in that** the magnetising coil (2) is fed via a controlled current source (7) the regulating current of which is used as measuring current, and with availability of means for additive superposition of the measuring current and the integrated measuring current as well as means of obtaining the shockwave course of the aforementioned additive superposition.

**Revendications**

1. Procédé pour déterminer la variation temporelle de l'onde de choc dans un élément structurel ferromagnétique, en particulier un outil, percutant ou sollicité par une contrainte semblable à la percussion, procédé dans lequel l'élément structurel est soumis à un flux magnétique dont la vitesse de variation en présence d'un choc est captée en tant que tension de mesure au moyen d'un dispositif de mesure associé à l'élément structurel, **caractérisé en ce que** la variation de l'onde de choc est obtenue par superposition additive de la tension de mesure et de la tension de mesure intégrée.

2. Procédé selon la revendication 1, dans lequel l'induction du flux magnétique s'effectue par l'intermédiaire d'une bobine magnétique (2) entourant l'élément structurel, la tension de mesure étant prélevée sur la bobine d'aimantation (2).

3. Dispositif pour déterminer la variation temporelle de l'onde de choc dans un élément structurel ferromagnétique, en particulier dans un outil, percutant ou sollicité par une contrainte semblable à la percussion, comprenant des moyens pour induire le flux magnétique par l'intermédiaire d'une bobine magnétique (2) entourant l'élément structurel (1), **ca-**

**ractérisé en ce que** la bobine magnétique (2) est alimentée par une source de tension (6) par l'intermédiaire d'une résistance inductive (8, respectivement 8, 9) montée en série, et la tension de mesure peut être prélevée sur la résistance inductive en série, et **en ce que** des moyens pour la superposition additive de la tension de mesure et de la tension de mesure intégrée ainsi que des moyens pour obtenir la variation de l'onde de choc à partir de ladite superposition additive sont prévus.

4. Dispositif pour déterminer la variation dans le temps de l'onde de choc dans un élément structurel ferromagnétique, en particulier dans un outil, percutant ou sollicité par une contrainte semblable à la percussion, comprenant des moyens pour induire le flux magnétique par l'intermédiaire d'une bobine magnétique (2) entourant l'élément structurel (1), **caractérisé en ce que** la bobine magnétique (2) est alimentée par une source de courant régulée (7) dont la tension régulée est employée comme tension de mesure, et **en ce que** des moyens pour la superposition additive de la tension de mesure et de la tension de mesure intégrée ainsi que des moyens pour obtenir la variation de l'onde de choc à partir de ladite superposition additive sont prévus.

B

spannungslos

mit Druck

H

*Fig. 1*

I

3

1

2

U

4

*Fig. 2*

∫

Gain

Spannungverlauf
der Stosswelle

−

+

Spannung an
der Messspule

*Fig. 3*

∫

Gain

Spannung an
der Messspule

+

+

Spannungsverlauf
der Stosswelle

*Fig. 4*

6

**Fig. 5**

Fig. 6 A

Fig. 6 B

Fig. 6 C

Fig. 6 D